# EUROPÄISCHE PATENTSCHRIFT

(11) **EP 3 781 826 B1**
(45) Veröffentlichungstag und Bekanntmachung des Hinweises auf die Patenterteilung: **23.08.2023**
(21) Anmeldenummer: 19719435.0
(22) Anmeldetag: 04.04.2019
(51) Int. Cl.: F16B 21/06, F16B 21/08, F16B 37/04, B62J 15/02, F16B 1/00

(54) **BEFESTIGUNGSVORRICHTUNG MIT EINEM BASISTEIL UND EINEM SPERRTEIL**
FASTENING DEVICE HAVING A BASE PART AND A BLOCKING PART
DISPOSITIF DE FIXATION COMPRENANT UNE PARTIE DE BASE ET UNE PARTIE DE VERROUILLAGE

(30) Priorität: 18.04.2018 DE 102018205929
(43) Veröffentlichungstag der Anmeldung: 24.02.2021
(73) Patentinhaber: Fidlock GmbH, 30659 Hannover (DE)
(72) Erfinder: HILLER, Lasse, 30952 Ronnenberg (DE); BOTKUS, Breido, 30175 Hannover (DE); FIEDLER, Joachim, 30519 Hannover (DE)
(74) Vertreter: Maikowski & Ninnemann Patentanwälte Partnerschaft mbB
(86) Internationale Anmeldenummer: PCT/EP2019/058510
(87) Internationale Veröffentlichungsnummer: WO 2019/201613

(56) Entgegenhaltungen:
- DE-A1-102008 006 135
- DE-A1-102008 019 063
- DE-A1-102014 103 181
- DE-A1-102015 216 145
- DE-A1-102015 225 438
- DE-U1-202017 104 413

## Beschreibung

Die Erfindung betrifft eine Befestigungsvorrichtung nach dem Anspruch 1.

Eine derartige Befestigungsvorrichtung umfasst ein Basisteil und eine Befestigungsbaugruppe, die entlang einer Ansetzrichtung aneinander ansetzbar sind. An dem Basisteil oder der Befestigungsbaugruppe ist zumindest eine Rastelement angeordnet, das dazu dient, in einer aneinander angesetzten Stellung des Basisteils und der Befestigungsbaugruppe eine formschlüssige Verbindung zwischen dem Basisteil und der Befestigungsbaugruppe herzustellen.

Eine solche Befestigungsvorrichtung kann beispielsweise zum Befestigen eines Schutzblechs an einem Fahrrad dienen. Beispielsweise kann hierbei vorgesehen sein, das Basisteil an einem Gabelschaft zu befestigen, zum Beispiel unterseitig eines Gabelschafts im Bereich der vorderen Gabel, um über das Basisteil die Befestigungsbaugruppe in Form des Schutzblechs an dem Gabelschaft und damit im Bereich des Vorderrads des Fahrrads festzulegen.

Wünschenswert ist hierbei eine Befestigungsvorrichtung, die zum einen bei montierter Befestigungsbaugruppe, beispielsweise bei montiertem Schutzblech, eine feste Anordnung der Befestigungsbaugruppe an einer zugeordneten, übergeordneten Baugruppe, zum Beispiel einem Gabelschaft, gewährleistet. Dabei ist zum zweiten wünschenswert, die Befestigungsvorrichtung lösbar zu gestalten, sodass beispielsweise ein Schutzblech in einfacher Weise auch wieder abgenommen werden kann.

Die DE 10 2008 006 135 A1 offenbart eine Verschlussvorrichtung, bei der ein erstes Verschlussmodul über einen Verschlusszapfen mit einem Feder-Verriegelungselement eines zweiten Verschlussmoduls verrastbar ist. An dem ersten Verschlussmodul und dem zweiten Verschlussmodul sind Magnetelemente angeordnet, die beim Ansetzen der Verschlussmodule aneinander magnetisch anziehend zusammenwirken. Ein anderes Beispiel ist in der DE 10 2015 216145 A1 offenbart.

Aufgabe der vorliegenden Erfindung ist es, eine Befestigungsvorrichtung zur Verfügung zu stellen, die eine zuverlässige Befestigung ermöglicht und dabei für einen Nutzer einfach zu bedienen ist, insbesondere um die Befestigung herzustellen und auch wieder zu lösen. Diese Aufgabe wird durch einen Gegenstand mit den Merkmalen des Anspruchs 1 gelöst. Demnach umfasst die Befestigungsvorrichtung ein Sperrteil, das in der angesetzten Stellung des Basisteils und der Befestigungsbaugruppe mit dem Basisteil verbindbar ist, wobei das Basisteil und/oder die Befestigungsbaugruppe ein erstes Magnetelement und das Sperrteil ein zweites Magnetelement aufweisen, die beim Verbinden des Basisteils und des Sperrteils miteinander magnetisch anziehend zusammenwirken, wobei das Sperrteil ein Fixierelement aufweist, das ausgebildet ist, zum Sperren der formschlüssigen Verbindung zwischen dem Basisteil und der Befestigungsbaugruppe mit dem zumindest einen Rastelement zusammenzuwirken.

Das Sperrteil dient dazu, die über das zumindest eine Rastelement hergestellte Verbindung zwischen dem Basisteil und der Befestigungsbaugruppe zu sichern. Hierzu weist das Sperrteil ein Fixierelement auf, das bei mit dem Basisteil verbundenem Sperrteil auf das zumindest eine Rastelement derart einwirkt, dass das Rastelement nicht ohne weiteres gelöst werden kann und somit die formschlüssige Verbindung zwischen dem Basisteil und der Befestigungsbaugruppe gesichert ist.

Ein oder mehrere Rastelemente können an dem Basisteil oder der Befestigungsbaugruppe angeordnet sein.

Bei der Befestigungsbaugruppe kann es sich beispielsweise um einen an einem Fahrzeug, zum Beispiel einem Zweirad, insbesondere einem Fahrrad zu befestigenden Gegenstand, zum Beispiel ein Schutzblech handeln. Das Basisteil kann demgegenüber beispielsweise an dem Fahrzeug, zum Beispiel dem Fahrrad, angeordnet werden, um über das Basisteil somit eine (lösbare) Anordnung der Befestigungsbaugruppe an dem Fahrzeug zu ermöglichen.

Zum Anordnen der Befestigungsbaugruppe an einer übergeordneten Baugruppe, an der das Basisteil festgelegt ist, kann beispielsweise zunächst die Befestigungsbaugruppe an dem Basisteil an der übergeordneten Baugruppe angeordnet werden, wodurch eine formschlüssige Verbindung zwischen dem Basisteil und der Befestigungsbaugruppe über das zumindest eine Rastelement hergestellt wird. Sodann wird das Sperrteil an das Basisteil angesetzt derart, dass das Sperrteil mit seinem Fixierelement mit dem zumindest einen Rastelement in Wechselwirkung tritt und somit die über das zumindest eine Rastelement hergestellte formschlüssige Verbindung über das Fixierelement gesperrt ist.

Ist das Sperrteil in Position an dem Basisteil, kann der über das zumindest eine Rastelement hergestellte Formschluss nicht gelöst werden, weil das zumindest eine Rastelement über das Fixierelement in Position gehalten wird. Erst nach Lösen des Sperrteils kann der Formschluss zwischen dem Basisteil und der Befestigungsbaugruppe aufgehoben werden, sodass die Befestigungsbaugruppe, zum Beispiel ein Schutzblech, von dem Basisteil gelöst werden kann.

Das Ansetzen des Sperrteils an das Basisteil wird hierbei dadurch magnetisch unterstützt, dass an dem Basisteil und/oder der Befestigungsbaugruppe ein erstes Magnetelement und an dem Sperrteil ein zweites Magnetelement angeordnet sind. Die Magnetelemente wirken bei Ansetzen des Sperrteils an das Basisteil magnetisch anziehend zusammen, sodass das Sperrteil beispielsweise selbsttätig hin zu dem Basisteil gezogen und somit mit dem Basisteil verbunden wird.

Die Magnetelemente können beispielsweise jeweils durch einen Permanentmagneten, zum Beispiel einen Neodym-Magnet, ausgestaltet sein. Denkbar ist jedoch auch, dass ein Magnetelement als Permanentmagnet, das andere Magnetelement hingegen als (passiver) ferromagnetischer Anker gefertigt ist.

In einer Ausgestaltung wird das Sperrteil, wenn es mit dem Basisteil verbunden ist, allein aufgrund der Magnetkräfte der Magnetelemente an dem Basisteil und/oder der Befestigungsbaugruppe gehalten. In diesem Fall wird die Verbindung zwischen dem Sperrteil und dem Basisteil somit (allein) über die Magnetelemente hergestellt.

Weil das Sperrteil magnetisch anziehend mit dem Basisteil zusammenwirkt, ergibt sich eine für einen Nutzer einfache und komfortable Handhabung zum Ansetzen des Sperrteils an das Basisteil. Das Sperrteil ist von dem Basisteil lösbar, indem das Sperrteil entgegen der Magnetkräfte von dem Basisteil abgenommen werden kann.

In einer Ausgestaltung weist das Basisteil einen Körper und einen von dem Körper vorstehenden Eingriffsabschnitt mit einer Eingriffsöffnung auf. Das Sperrteil kann beispielsweise ebenfalls einen Körper aufweisen, wobei der Körper des Basisteils und der Körper des Sperrteils auf einander abgewandten Seiten der Befestigungsbaugruppe zu liegen kommen, wenn das Sperrteil an das Basisteil angesetzt ist.

Das Sperrteil kann hierbei ein Eingriffselement zum Eingreifen in die Eingriffsöffnung des Basisteils aufweisen. Das Eingriffselement kann beispielsweise zapfenförmig ausgestaltet sein.

In einer Ausgestaltung kann das Sperrteil durch Einstecken des Eingriffselements in die Eingriffsöffnung des Eingriffsabschnitts des Basisteils mit dem Basisteil verbunden werden. Dies erfolgt in magnetisch unterstützter Weise durch Wirkung der Magnetelemente des Basisteils und des Sperrteils, wobei das Sperrteil in verbundener Stellung magnetisch an dem Basisteil gehalten wird.

In einer Ausgestaltung kann das Basisteil eine erste Gewindeeinrichtung, zum Beispiel in Form eines oder mehrerer Gewindegänge, aufweisen, während das Sperrteil eine zweite Gewindeeinrichtung aufweist, beispielsweise ebenfalls in Form eines oder mehrerer Gewindegänge oder in Form eines zum Beispiel zapfenförmigen Führungselements zum Wechselwirken mit der Gewindeeinrichtung des Basisteils. Über solche Gewindeeinrichtungen können das Sperrteil und das Basisteil schraubend miteinander verbunden werden, was die Handhabung für einen Nutzer weiter vereinfachen und zudem die Festigkeit der Befestigungsvorrichtung erhöhen kann.

So kann durch den Gewindeeingriff zwischen dem Basisteil und dem Sperrteil insbesondere die Festigkeit der Verbindung bei einer Schockbelastung verbessert sein, weil eine Schockbelastung nicht ohne weiteres zum Lösen der Verbindung des Sperrteils mit dem Basisteil führen kann. Weil ein Nutzer zum Lösen des Sperrteils von dem Basisteil das Sperrteil von dem Basisteil abschrauben kann, ist das Lösen des Sperrteils für einen Nutzer vereinfacht, weil durch schraubendes Abnehmen des Sperrteils von dem Basisteil die Magnetkräfte der Magnetelemente in für einen Nutzer komfortabler Weise überwunden werden können.

In einer Ausgestaltung weist die Befestigungsbaugruppe eine Befestigungsöffnung auf, in die das zumindest eine Rastelement in der angesetzten Stellung eingreift. Die Befestigungsbaugruppe kann beispielsweise einen Flächenabschnitt aufweisen, in den die Befestigungsöffnung eingeformt ist. Ein oder mehrere Rastelemente sind in diesem Fall an dem Basisteil angeordnet und greifen in die Befestigungsöffnung ein, wenn das Basisteil und die Befestigungsbaugruppe aneinander angesetzt sind.

Die formschlüssige Verbindung zwischen dem Basisteil und der Befestigungsbaugruppe wird in diesem Fall dadurch hergestellt, dass das eine oder die mehreren Rastelemente in der angesetzten Stellung einen die Befestigungsöffnung begrenzenden Randabschnitt formschlüssig umgreifen, sodass das Basisteil und die Befestigungsbaugruppe, beispielsweise ein Schutzblech eines Fahrrads, formschlüssig aneinander gehalten sind.

Sind das Basisteil und die Befestigungsbaugruppe in der angesetzten Stellung - aber vor Verbinden des Sperrteils mit dem Basisteil - aneinander angesetzt, so ist die über das zumindest eine Rastelement hergestellte formschlüssige Verbindung (noch) nicht gesichert und somit vorläufig, sodass die Befestigungsbaugruppe in einfacher Weise von dem Basisteil auch wieder gelöst werden könnte. Um die Verbindung der Befestigungsbaugruppe an dem Basisteil zu sichern, wird das Sperrteil an das Basisteil angesetzt derart, dass das Fixierelement auf das mindestens eine Rastelement einwirkt und dieses in seinem Formschluss fixiert, beispielsweise indem das Fixierelement das zumindest eine Rastelement in Eingriff mit dem die Befestigungsöffnung der Befestigungsbaugruppe begrenzenden Randabschnitt hält. Das mindestens eine Rastelement kann somit nicht außer Eingriff von dem Randabschnitt gelangen, sodass das Basisteil und die Befestigungsbaugruppe zuverlässig und belastbar miteinander verbunden sind.

In einer Ausgestaltung weist das Basisteil zwei Rastelemente zum Zusammenwirken mit gegenüberliegenden Randabschnitten der Befestigungsbaugruppe auf. Das Fixierelement kann hierbei, wenn das Sperrteil mit dem Basisteil verbunden ist, zwischen den Rastelementen zu liegen kommen, sodass das Fixierelement die Rastelemente in ihrer Position relativ zu den Randabschnitten der Befestigungsbaugruppe fixiert und somit den formschlüssigen Eingriff der Rastelemente mit den Randabschnitten der Befestigungsbaugruppe sichert.

In einer Ausgestaltung ist das zumindest eine Rastelement insbesondere quer zur Ansetzrichtung elastisch auslenkbar. Bei Ansetzen des Basisteils und der Befestigungsbaugruppe aneinander kann das zumindest eine Rastelement elastisch (hinreichen weit) verformt werden, sodass das zumindest eine Rastelement rastend in Eingriff mit dem jeweils anderen Teil schnappen kann. Ist das zumindest eine Rastelement an dem Basisteil angeordnet, kann auf diese Weise das Rastelement rastend mit der Befestigungsbaugruppe verbunden werden. Ist das zumindest eine Rastelement hingegen an der Befestigungsbaugruppe angeordnet, kann auf diese Weise das zumindest eine Rastelement rastend mit dem Basisteil verbunden werden.

Das zumindest eine Rastelement kann in sich elastisch federnd ausgebildet sein. Denkbar ist aber auch, ein über ein (gesondertes) Federelement angefedertes, bewegliches Rastelement zu verwenden.

Das mindestens eine Rastelement weist hierbei ein Formschlusselement zum Beispiel in Form einer Rastnase auf, das zum Herstellen der formschlüssigen Verbindung in der angesetzten Stellung dient. Sind das Basisteil und die Befestigungsbaugruppe aneinander angesetzt, umgreift das zumindest eine Rastelement mit dem Formschlusselement beispielsweise einen zugeordneten Randabschnitt der Befestigungsöffnung der Befestigungsbaugruppe, sodass darüber die formschlüssige Verbindung zwischen dem Basisteil und der Befestigungsbaugruppe hergestellt ist.

In diesem Fall ist das Fixierelement vorzugsweise dazu ausgebildet, auf eine dem Formschlusselement abgewandte Seite des zumindest einen Rastelements einzuwirken. Durch Einwirken auf das zumindest eine Rastelement verhindert das Fixierelement eine elastische Verformung des Rastelements, sodass das Basisteil und die Befestigungsbaugruppe nicht voneinander gelöst werden können, jedenfalls nicht ohne das Sperrteil von dem Basisteil abzunehmen.

Das Formschlusselement des Rastelements kann hierbei derart angeschrägt sein, dass es bei Ansetzen selbsttätig in Eingriff mit dem zugeordneten Randabschnitt der Befestigungsbaugruppe gelangt und dazu mit einer Auflaufschräge auf den Randabschnitt aufläuft. Auch in Löserichtung kann das Formschlusselement hierbei angeschrägt sein, sodass auch beim Lösen der Befestigungsbaugruppe von dem Basisteil - bei abgenommenem Sperrteil - das Formschlusselement auf den Randabschnitt aufläuft und somit unter Auslenkung des Rastelements über den Randabschnitt hinweg geführt wird. Denkbar ist alternativ aber auch, dass das Formschlusselement in Löserichtung nicht angeschrägt, sondern zum Beispiel quer zur Löserichtung erstreckt ist und somit eine gesonderte Betätigung zum Lösen der Verrastung zwischen der Befestigungsbaugruppe und dem Basisteil erforderlich ist.

In einer Ausgestaltung ist denkbar, dass die Befestigungsbaugruppe genau in einer Orientierung oder in mehreren diskreten, definierten Orientierungen mit dem Basisteil verbunden werden kann. Die Befestigungsbaugruppe kann somit nur in einer oder mehreren vorbestimmten Stellungen mit dem Basisteil verbunden werden.

Hierbei kann vorgesehen sein, dass das Basisteil und die Befestigungsbaugruppe, beispielsweise ausgestaltet durch ein Schutzblech eines Fahrrads, in der aneinander angesetzten Stellung linear zueinander verschoben werden können. Auf diese Weise kann die Lage der Befestigungsbaugruppe zu dem Basisteil auch in der angesetzten Stellung (noch) angepasst werden, beispielsweise um die Lage eines Schutzblechs an einem Fahrrad einzustellen. Die lineare Verschiebbarkeit kann aufgehoben sein, wenn das Sperrteil an das Basisteil angesetzt ist. In alternativer Ausgestaltung kann die Befestigungsbaugruppe aber auch dann linear zu dem Basisteil verschoben werden, wenn das Sperrteil an das Basisteil angesetzt ist.

Das zumindest eine Rastelement ist nicht notwendigerweise mit einem Formschlusselement in Form einer Rastnase ausgestaltet. Denkbar ist auch, dass das zumindest eine Rastelement ein Formschlusselement zum Beispiel in Form einer Verzahnung oder dergleichen aufweist, die in angesetzter Stellung in eine zugeordnete Gegenverzahnung des anderen Teils, beispielsweise der Befestigungsbaugruppe eingreift, wobei der Eingriff in verbundener Stellung des Sperrteils gesichert ist.

In einer Ausgestaltung weisen das Basisteil oder die Befestigungsbaugruppe eine erste Formschlusseinrichtung und das Sperrteil eine zweite Formschlusseinrichtung zum Hindern eines Verdrehens des Sperrteils gegenüber dem Basisteil um die Ansetzrichtung auf. Beispielsweise kann das Basisteil oder die Befestigungsbaugruppe eine erste Formschlusseinrichtung in Form einer Verzahnung aufweisen, während das Sperrteil eine zweite Formschlusseinrichtung in Form einer Verzahnung trägt. Die Formschlusseinrichtungen des Basisteils oder der Befestigungsbaugruppe einerseits und des Sperrteils andererseits können beispielsweise übereinander ratschen, sodass ein Verdrehen des Sperrteils gegenüber dem Basisteil oder der Befestigungsbaugruppe zwar erschwert, nicht aber vollständig unterbunden ist.

Anstelle solcher Formschlusseinrichtungen kann, in anderer Ausgestaltung, auch eine Reibschlusseinrichtung zum Bereitstellen eines Reibschlusses zwischen dem Sperrteil und dem Basisteil oder der Befestigungsbaugruppe verwendet werden.

Die erste Formschlusseinrichtung des Basisteils kann beispielsweise an einer einem Formschlusselement abgewandten Seite des zumindest einen Rastelements ausgebildet sein. Die zweite Formschlusseinrichtung des Sperrteils kann demgegenüber beispielsweise au ßenseitig des Fixierelements ausgebildet sein. Ist das Sperrteil mit dem Basisteil verbunden, stehen die Formschlusseinrichtungen miteinander in Eingriff, sodass das Sperrteil nicht ohne weiteres, jedenfalls nicht ohne Überwinden des über die Formschlusseinrichtungen hergestellten Formschlusses gegenüber dem Basisteil verdreht werden kann.

Durch solche Formschlusseinrichtungen kann die Drehstellung des Sperrteils gegenüber dem Basisteil zusätzlich gesichert werden. Ist das Sperrteil über Gewindeeinrichtungen an dem Basisteil und dem Sperrteil schraubend mit dem Basisteil verbunden, kann auf diese Weise die Schraubverbindung zwischen dem Basisteil und dem Sperrteil zusätzlich gesichert sein. Der Formschluss zwischen den Formschlusseinrichtungen kann hierbei unter Last noch verstärkend sein, sodass unter Last ein Lösen der Verbindung zwischen dem Sperrteil und dem Basisteil gesperrt ist.

In einer Ausgestaltung weist das Sperrteil einen Körper auf, von dem das Fixierelement vorsteht. Das Fixierelement kann hierbei umfänglich um die Ansetzrichtung, entlang derer das Basisteil und die Befestigungsbaugruppe aneinander ansetzbar sind und auch das Sperrteil mit dem Basisteil verbindbar ist, erstreckt sein und beispielsweise ringförmig ausgestaltet sein, sodass das Sperrteil grundsätzlich in beliebigen Stellungen mit dem Basisteil verbunden werden kann, ohne dass die sperrende Wirkung des Fixierelements dadurch beeinträchtigt ist.

Nach einem anderen Aspekt weist eine nicht erfindungsgemäße Befestigungsvorrichtung ein Basisteil und eine Befestigungsbaugruppe auf, wobei das Basisteil und die Befestigungsbaugruppe aneinander ansetzbar und in einer angesetzten Stellung über ein Schraubelement miteinander verbunden sind. Hierbei ist vorgesehen, dass das Basisteil ein erstes Magnetelement und das Schraubelement ein zweites Magnetelement aufweisen, die magnetisch anziehend zusammenwirken.

In diesem Fall erfolgt die Befestigung der Befestigungsbaugruppe an dem Basisteil somit über ein Schraubelement, das magnetisch anziehend mit dem Basisteil zusammenwirkt. Über die Magnetelemente des Basisteils und des Schraubelements wird die Schraubverbindung zwischen dem Basisteil und dem Schraubelement somit zusätzlich gesichert, sodass insbesondere bei Vibrationen ein Lösen der Schraubverbindung erschwert, wenn nicht ausgeschlossen ist.

Dies geht von der Erkenntnis aus, dass durch Verwendung von Magnetelementen eine Schraubverbindung gegebenenfalls gesichert und somit vibrationsbeständiger ausgestaltet sein kann. Bei Vibrationen kann sich das Schraubelement somit nur erschwert lösen, weil es durch Wirkung der Magnetelemente mit einer Kraft beaufschlagt ist, die das Schraubelement hin zu dem Basisteil zieht.

Eine solche Befestigungsvorrichtung kann grundsätzlich in ganz beliebiger Weise zum Einsatz kommen, beispielsweise zum Befestigen eines Teils an einem Fahrzeug, zum Beispiel einem Zweirad, insbesondere einem Fahrrad.

Der der Erfindung zugrunde liegende Gedanke soll nachfolgend anhand der in den Figuren dargestellten Ausführungsbeispiele näher erläutert werden. Es zeigen:
- Fig. 1A: eine Ansicht eines ersten Ausführungsbeispiels einer Befestigungsvorrichtung;
- Fig. 1B: eine Schnittansicht entlang der Linie A-A gemäß Fig. 1A;
- Fig. 2A: eine Ansicht der Befestigungsvorrichtung, bei Ansetzen eines Basisteils und einer Befestigungsbaugruppe der Befestigungsvorrichtung aneinander;
- Fig. 2B: eine Schnittansicht der Anordnung gemäß Fig. 2A;
- Fig. 3A: eine Ansicht der Befestigungsvorrichtung, bei weiterem Ansetzen des Basisteils und der Befestigungsbaugruppe der Befestigungsvorrichtung aneinander;
- Fig. 3B: eine Schnittansicht der Anordnung gemäß Fig. 3A;
- Fig. 4A: eine Ansicht der Befestigungsvorrichtung, in angesetzter Stellung des Basisteils und der Befestigungsbaugruppe;
- Fig. 4B: eine Schnittansicht der Anordnung gemäß Fig. 4A;
- Fig. 5A: eine Ansicht der Befestigungsvorrichtung, bei mit dem Basisteil verbundenem Sperrteil;
- Fig. 5B: eine Schnittansicht der Anordnung gemäß Fig. 5A;
- Fig. 6: eine Ansicht der Befestigungsvorrichtung mit dem Basisteil und dem Sperrteil;
- Fig. 7A: die Schnittansicht gemäß Fig. 5B;
- Fig. 7B: eine vergrößerte Ansicht der Anordnung gemäß Fig. 7A im Ausschnitt A;
- Fig. 8A: eine Ansicht eines zweiten Ausführungsbeispiels einer Befestigungsvorrichtung;
- Fig. 8B: eine Schnittansicht entlang der Linie A-A gemäß Fig. 8A;
- Fig. 9A: eine Ansicht der Befestigungsvorrichtung, bei Ansetzen eines Basisteils und einer Befestigungsbaugruppe der Befestigungsvorrichtung aneinander;
- Fig. 9B: eine Schnittansicht der Anordnung gemäß Fig. 9A;
- Fig. 10A: eine Ansicht der Befestigungsvorrichtung, bei weiterem Ansetzen des Basisteils und der Befestigungsbaugruppe der Befestigungsvorrichtung aneinander;
- Fig. 10B: eine Schnittansicht der Anordnung gemäß Fig. 10A;
- Fig. 11A: eine Ansicht der Befestigungsvorrichtung, in angesetzter Stellung des Basisteils und der Befestigungsbaugruppe;
- Fig. 11B: eine Schnittansicht der Anordnung gemäß Fig. 11A;
- Fig. 12A: eine Ansicht der Befestigungsvorrichtung, bei mit dem Basisteil verbundenem Sperrteil;
- Fig. 12B: eine Schnittansicht der Anordnung gemäß Fig.12A;
- Fig. 13A: eine Ansicht der Befestigungsvorrichtung, bei Lösen des Sperrteils von dem Basisteil;
- Fig. 13B: eine Schnittansicht der Anordnung gemäß Fig.13A;
- Fig. 14: eine Ansicht der Befestigungsvorrichtung mit dem Basisteil und dem Sperrteil;
- Fig. 15A: die Schnittansicht gemäß Fig. 13B;
- Fig. 15B: eine vergrößerte Ansicht der Anordnung gemäß Fig. 15A im Ausschnitt A;
- Fig. 16: eine Ansicht eines weiteren Ausführungsbeispiels einer Befestigungsvorrichtung mit einem Basisteil und einem Sperrteil;
- Fig. 17A: eine Schnittansicht durch die Befestigungsvorrichtung;
- Fig. 17B: eine vergrößerte Ansicht der Anordnung gemäß Fig. 17A im Ausschnitt A; und
- Fig. 18: eine schematische Ansicht eines Ausführungsbeispiels einer nicht erfindungsgemäßen Befestigungsvorrichtung mit einem Basisteil, einer Befestigungsbaugruppe und einem Schraubelement zum Befestigen des Basisteils an der Befestigungsbaugruppe.

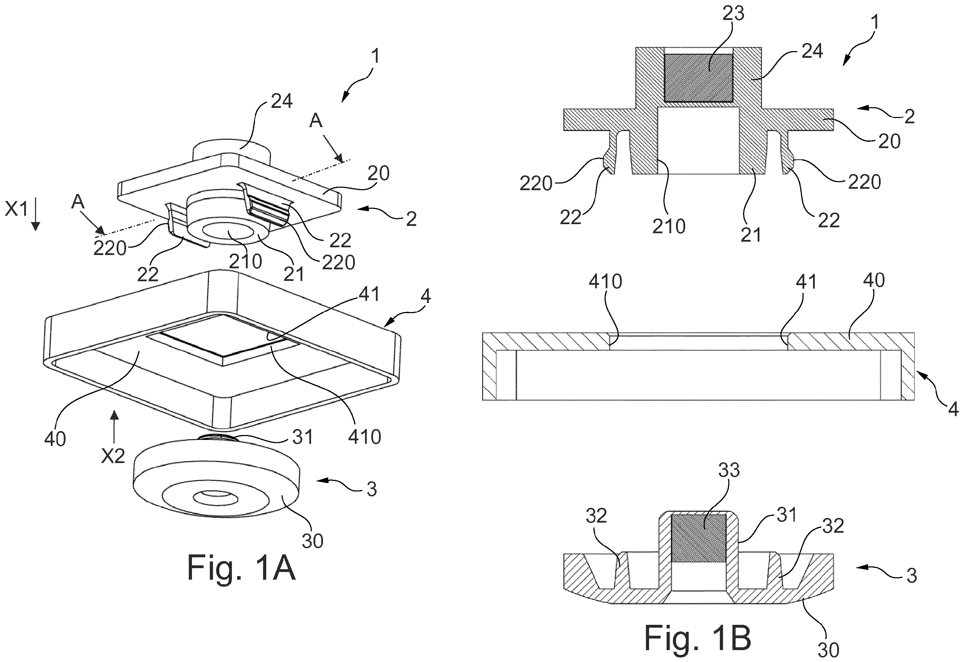

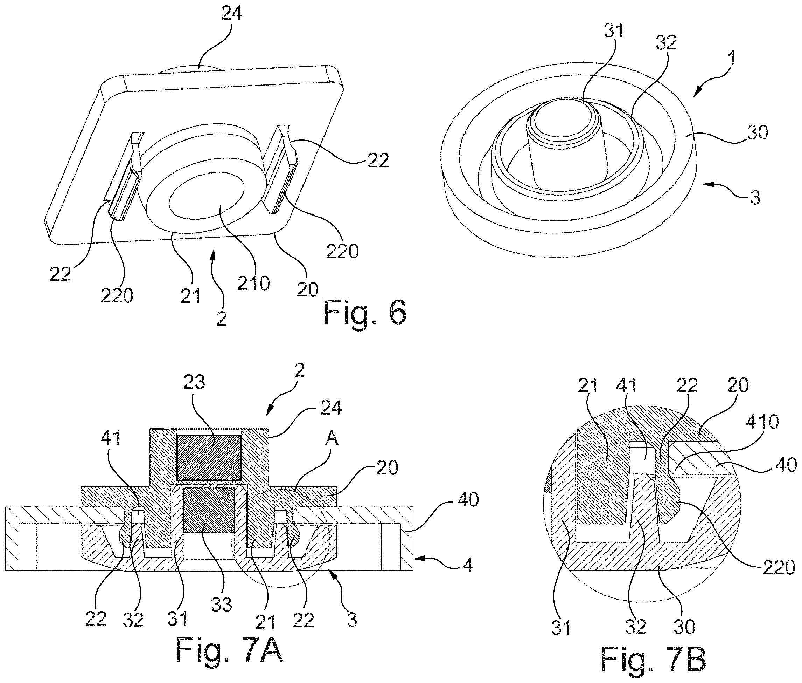

Fig. 1A, 1B bis 7A, 7B zeigen ein erstes Ausführungsbeispiel einer Befestigungsvorrichtung 1, die ein Basisteil 2, eine Befestigungsbaugruppe 4 und ein Sperrteil 3 aufweist, wie dies zum Beispiel aus Fig. 1A ersichtlich ist.

In einer Ausgangsstellung liegen das Basisteil 2, die Befestigungsbaugruppe 4 und das Sperrteil 3 getrennt voneinander vor, wie dies aus Fig. 1A und 1B ersichtlich ist. Das Basisteil 2 kann hierbei beispielsweise an einer übergeordneten Baugruppe, zum Beispiel an einem Fahrzeug, zum Beispiel einem Zweirad, insbesondere einem Fahrrad, festgelegt sein, um über das Basisteil 2 eine Befestigung der Befestigungsbaugruppe 4 an dem Fahrzeug zu ermöglichen. Das Sperrteil 3 dient dann zum Sichern der Verbindung zwischen der Befestigungsbaugruppe 4 und dem Basisteil 2.

Das Basisteil 2 weist einen Körper 20 und einen von dem Körper 20 in Richtung der Befestigungsbaugruppe 4 vorstehenden Eingriffsabschnitt 21 in Form eines Zapfenstumpfes auf. Innerhalb des im Wesentlichen zylindrisch geformten Eingriffsabschnitts 21 ist eine Eingriffsöffnung 210 geformt, in die das Sperrteil 3 mit einem von einem Körper 30 vorstehenden Eingriffselement 31 in Form eines Zapfens eingreifen kann, um das Sperrteil 3 mit dem Basisteil 2 zu verbinden.

Radial außerhalb des Eingriffsabschnitts 21 stehen von dem Körper 20 des Basisteils 2 zwei Rastelemente 22 vor, die an diametral gegenüberliegenden Seiten des Eingriffsabschnitts 21 angeordnet sind und jeweils ein Formschlusselement 220 in Form einer nach außen weisenden Rastnase aufweisen.

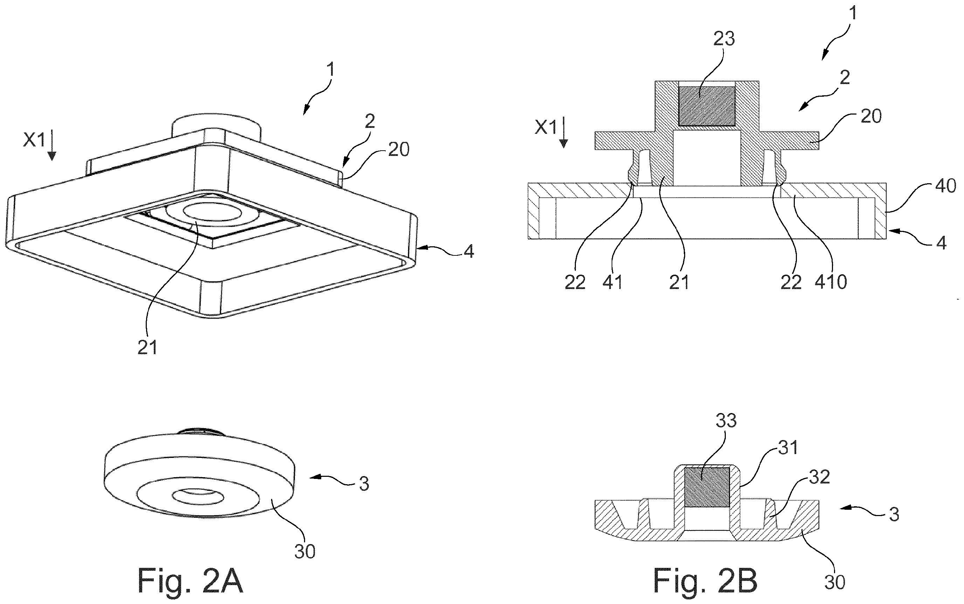

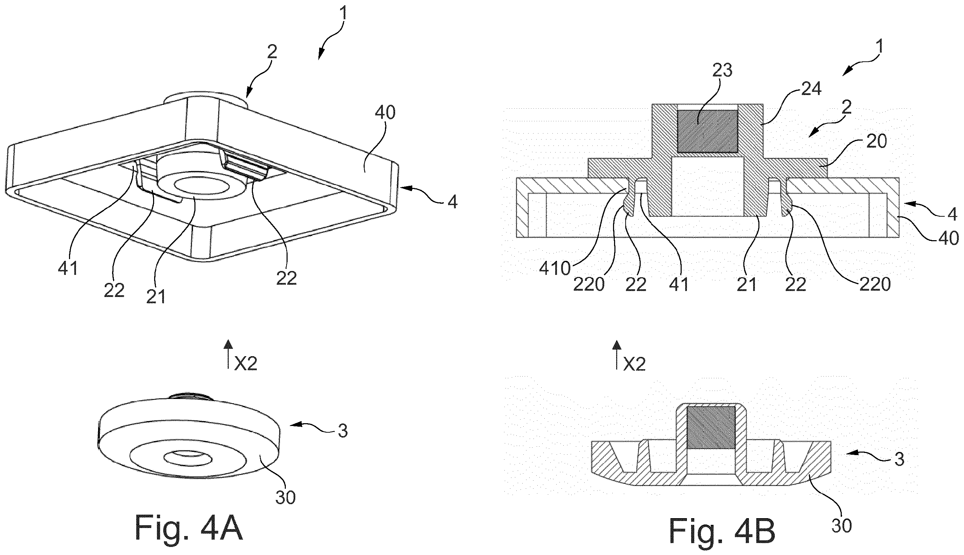

Zum Verbinden der Befestigungsbaugruppe 4, beispielsweise in Form eines Schutzblechs, mit dem Basisteil 2 können das Basisteil 2 und die Befestigungsbaugruppe 4 entlang einer Ansetzrichtung X1 aneinander angesetzt werden (ist das Basisteil 2 beispielsweise an einem Fahrzeug, zum Beispiel einem Fahrrad festgelegt, wird üblicherweise die Befestigungsbaugruppe 4 an das Basisteil 2 angesetzt). Hierbei gelangen die Rastelemente 22 an dem Körper 20 des Basisteils 2 in Eingriff mit einer Eingriffsöffnung 41 in einem Flächenabschnitt 40 der Befestigungsbaugruppe 4, indem die Formschlusselemente 220 in Form der Rastnasen an den Rastelementen 22 gegenüberliegende Randabschnitte 410 der Befestigungsöffnung 41 hintergreifen, wie dies in der Abfolge von Fig. 2A, 2B hinzu Fig. 4A, 4B ersichtlich ist.

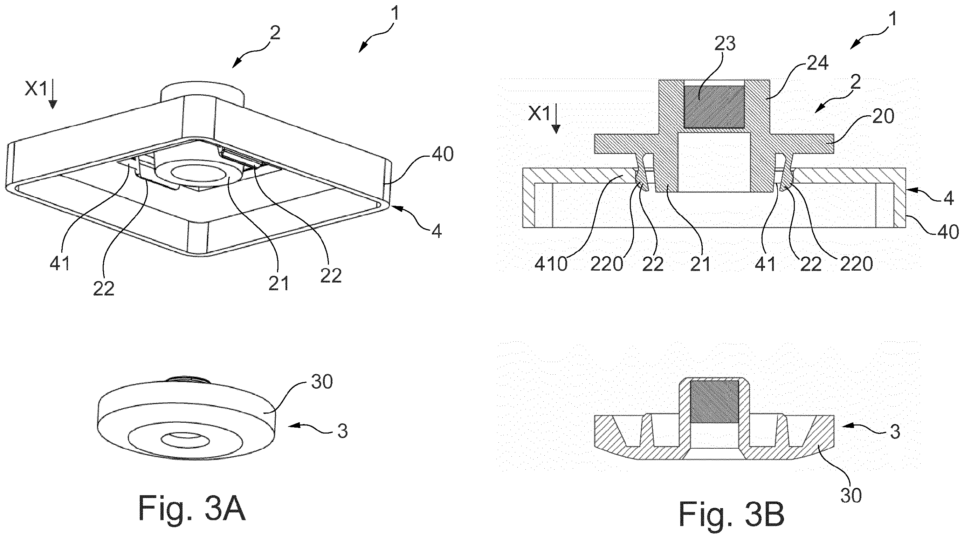

Die Rastelemente 22 des beispielsweise einstückig aus Kunststoff mittels Kunststoffspritzgießen hergestellten Basisteils 2 sind elastisch auslenkbar. Bei Ansetzen des Basisteils 2 und der Befestigungsbaugruppe 4 entlang der Ansetzrichtung X1 aneinander laufen die Formschlusselemente 220, die an ihren von dem Körper 20 abgewandten Enden abgeschrägt sind, auf die zugeordneten Randabschnitte 410 auf und werden dadurch radial nach innen gedrückt, wie dies im Übergang von Fig. 2A, 2B hin zu Fig. 3A, 3B ersichtlich ist. Beim weiteren Ansetzen schnappen die Formschlusselemente 220 in Eingriff mit den Randabschnitten 410 und hintergreifen die Randabschnitte 410, sodass eine formschlüssige Verbindung zwischen dem Basisteil 2 und der Befestigungsbaugruppe 4 hergestellt ist, wie dies aus Fig. 4A, 4B ersichtlich ist.

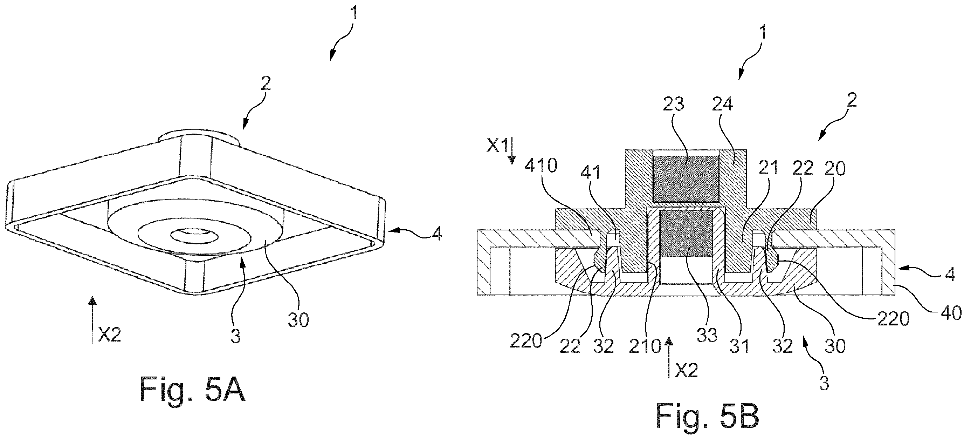

Um die Verbindung zwischen dem Basisteil 2 und der Befestigungsbaugruppe 4 zu sichern, kann sodann das Sperrteil 3 in eine Ansetzrichtung X2 an das Basisteil 2 angesetzt werden, wie dies in Fig. 5A, 5B ersichtlich ist. Beim Ansetzen gelangt das Eingriffselement 31 in Form des Zapfens an dem Körper 30 des Sperrteils 3 in Eingriff mit der Eingriffsöffnung 210 in dem Eingriffsabschnitt 21 des Basisteils 2, und ein ringförmig an dem Körper 30 des Sperrteils 3 geformtes Fixierelement 32, ersichtlich zum Beispiel aus Fig. 6, kommt innenseitig der Rastelemente 22 des Basisteils 2 zu liegen, wie dies aus Fig. 5B ersichtlich ist.

Bei verbundenem Sperrteil 3 ist somit ein Auslenken der Rastelemente 22 radial nach innen gesperrt, sodass der Formschluss zwischen dem Basisteil 2 und der Befestigungsbaugruppe 4 gesichert ist. Ohne Abnehmen des Sperrteils 3 kann die Verbindung zwischen dem Basisteil 2 und der Befestigungsbaugruppe 4 nicht mehr gelöst werden.

In der durch das Sperrteil 3 gesicherten Stellung nehmen das Basisteil 2 und das Sperrteil 3 den Flächenabschnitt 40 der Befestigungsbaugruppe 4 zwischen sich auf. Die Verbindung der Befestigungsbaugruppe 4 mit dem Basisteil 2 wird hierbei über die Rastelemente 22 hergestellt.

Wird die Befestigungsbaugruppe 4 entlang der Ansetzrichtung X1 zu dem Basisteil 2 belastet, so drücken die Rastelemente 22 nach innen gegen das Fixierelement 32, können aber nicht über das Fixierelement 32 hinaus nach innen ausgelenkt werden, sodass die Formschlusselemente 220 in Form der Rastnasen an den Rastelementen 22 nicht an den Randabschnitten 410 vorbeibewegt werden können und die formschlüssige Verbindung zwischen dem Basisteil 2 und der Befestigungsbaugruppe 4 somit gesichert ist, wie dies aus den Ansichten gemäß Fig. 7A, 7B ersichtlich ist.

Das Basisteil 2 und das Sperrteil 3 weisen jeweils ein Magnetelement 23, 33 auf, die bei Ansetzen des Sperrteils 3 an das Basisteil 2 magnetisch anziehend zusammenwirken. Das Magnetelement 23 des Basisteils 2 ist hierbei in einem zapfenförmigen Aufnahmeabschnitt 24 des Basisteils 2 aufgenommen. Das Magnetelement 33 des Sperrteils 3 ist in dem Eingriffselement 31 eingefasst. Wird das Sperrteil 3 an das Basisteil 2 angesetzt, so ziehen sich die Magnetelemente 23, 33 magnetisch an, sodass das Eingriffselement 31 selbsttätig in Eingriff mit der Eingriffsöffnung 210 des Eingriffsabschnitts 21 des Basisteils 2 gezogen und in der verbundenen Stellung in der Eingriffsöffnung 210 gehalten wird.

Bei diesem Ausführungsbeispiel hält das Sperrteil 3 somit aufgrund der magnetischen Kräfte der Magnetelemente 23, 33 an dem Basisteil 2.

Soll das Sperrteil 3 von dem Basisteil 2 gelöst werden, kann das Sperrteil 3 entgegen der Ansetzrichtung X2 von dem Basisteil 2 abgezogen werden. Hierzu sind die magnetischen Kräfte der Magnetelemente 23, 33 zu überwinden.

Ist das Sperrteil 3 abgenommen, kann der Formschluss zwischen dem Basisteil 2 und der Befestigungsgruppe 4 aufgehoben werden, sodass die Befestigungsbaugruppe 4 von dem Basisteil 2 abgenommen werden kann.

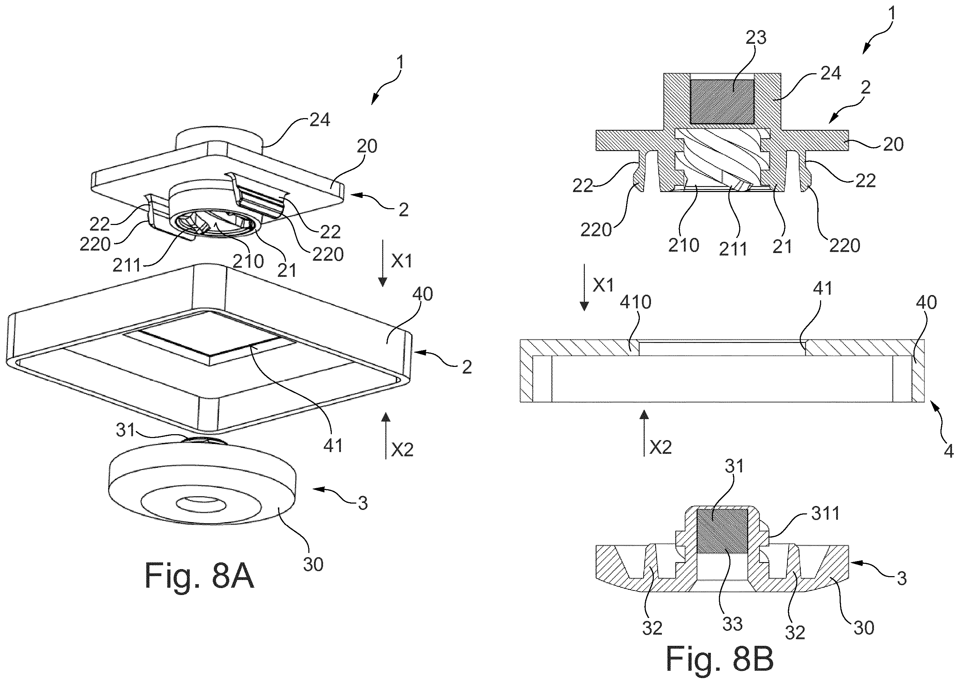

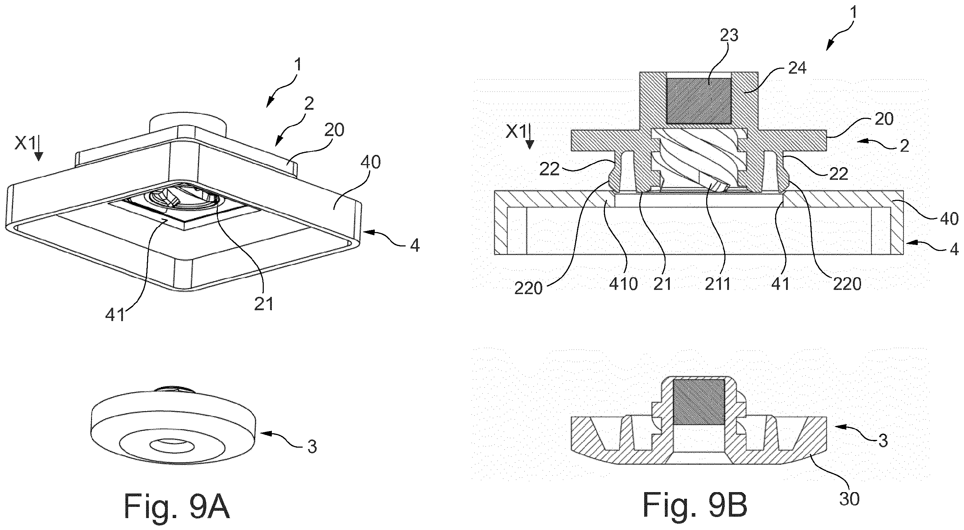

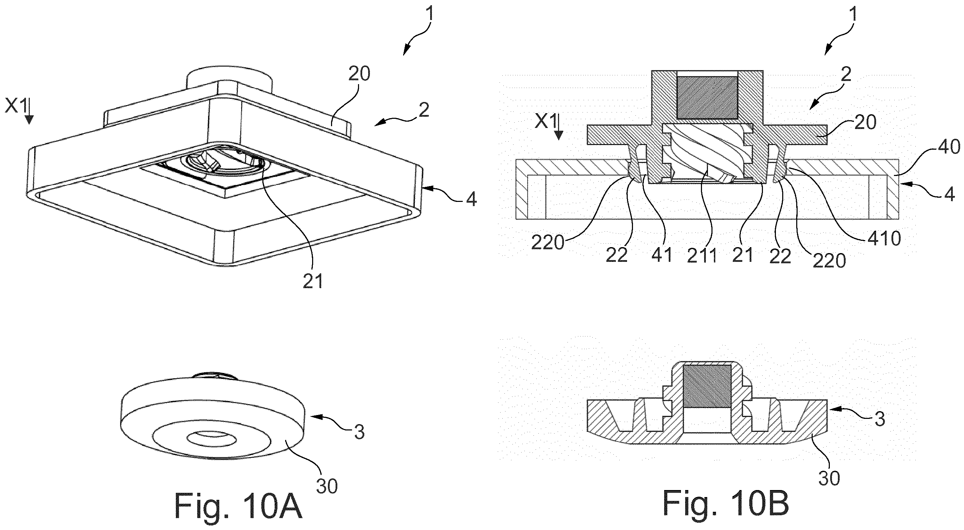

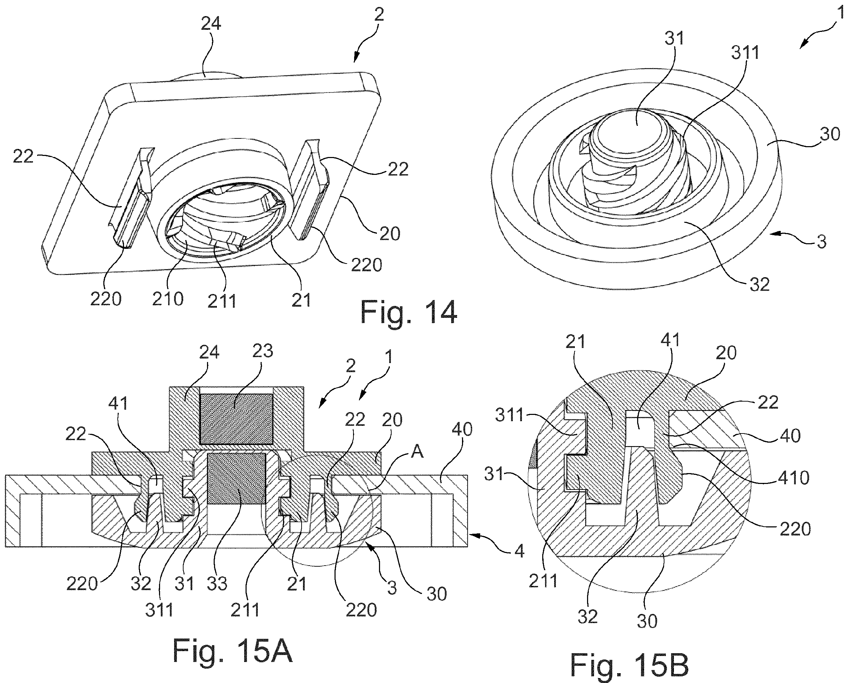

Bei einem in Fig. 8A, 8B bis 15A, 15B dargestellten Ausführungsbeispiel weist das Basisteil 2 innerhalb der Eingriffsöffnung 210 eine erste Gewindeeinrichtung 211 und das Sperrteil 3 außenseitig des Eingriffselements 31 eine zweite Gewindeeinrichtung 311, jeweils verwirklicht durch mehrere Gewindegänge, auf.

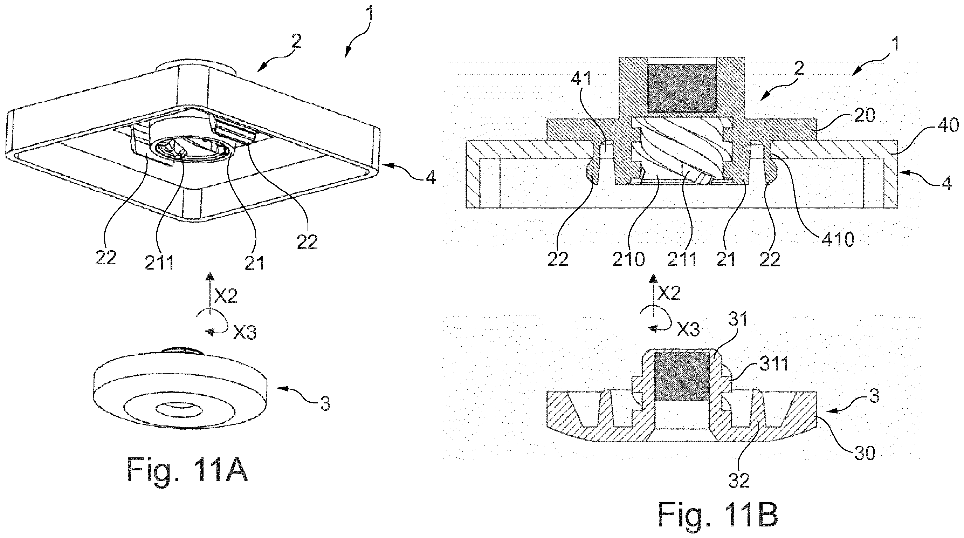

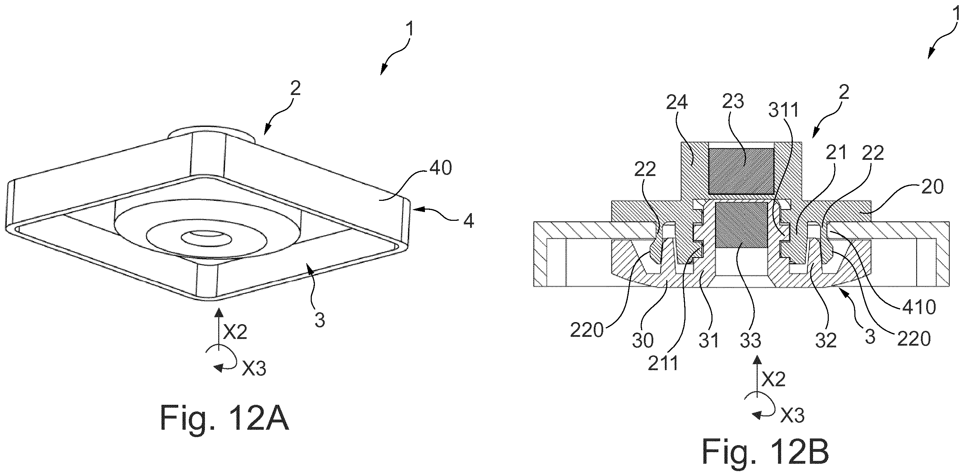

Zum Verbinden des Sperrteils 3 mit dem Basisteil 2 wird das Eingriffselement 31 über die Gewindeeinrichtung in 211, 311 in die Eingriffsöffnung 210 in eine Schraubrichtung X3 eingeschraubt, wie dies im Übergang von Fig. 11A, 11B hin zu Fig. 12A, 12B ersichtlich ist, wobei das Verbinden aufgrund der magnetischen Anziehungskräfte der Magnetelemente 23, 33 des Basisteils 2 und des Sperrteils 3 magnetisch unterstützt wird. Die Steigung der Gewindegänge der Gewindeeinrichtungen 211, 311 kann hierbei so gewählt sein, dass aufgrund der magnetischen Anziehungskräfte das Sperrteil 3 weitestgehend selbsttätig in Gewindeeingriffe mit der Eingriffsöffnung 210 gezogen wird, bis die verbundene Stellung gemäß Fig. 12A, 12B und 15A, 15B erreicht ist.

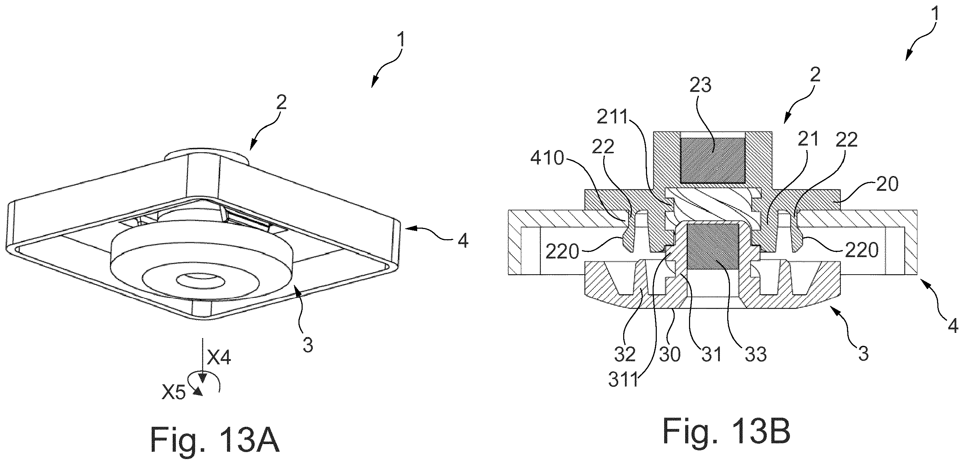

Zum Lösen kann umgekehrt das Sperrteil 3 in eine der Schraubrichtung X3 entgegengesetzte Schraubrichtung X5 außer Gewindeeingriff von der Eingriffsöffnung 210 des Eingriffsabschnitts 21 des Basisteils 2 geschraubt werden, sodass das Sperrteil 3 in eine Löserichtung X4 von dem Basisteil 2 entfernt werden kann, wie dies aus Fig. 13A, 13B ersichtlich ist. Das Sperrteil 3 kann somit schraubend von dem Basisteil 2 gelöst werden, um die Befestigungsbaugruppe 4 von dem Basisteil 2 abzunehmen.

Ansonsten ist das Ausführungsbeispiel gemäß Fig. 8A, 8B bis 15A, 15B funktional identisch dem Ausführungsbeispiel gemäß Fig. 1A, 1B bis 7A, 7B, sodass auf die vorangehenden Erläuterungen verwiesen werden soll.

Durch den Gewindeeingriff zwischen dem Sperrteil 3 und dem Basisteil 2 ergibt sich gegebenenfalls eine verbesserte Verbindung des Sperrteils 3 mit dem Basisteil 2, die insbesondere auch einer Schockbelastung zuverlässig widerstehen kann. Zudem kann für einen Nutzer die Bedienbarkeit verbessert sein, weil insbesondere das Lösen des Sperrteils 3 durch schraubende Bewegung einfacher und komfortabler sein kann.

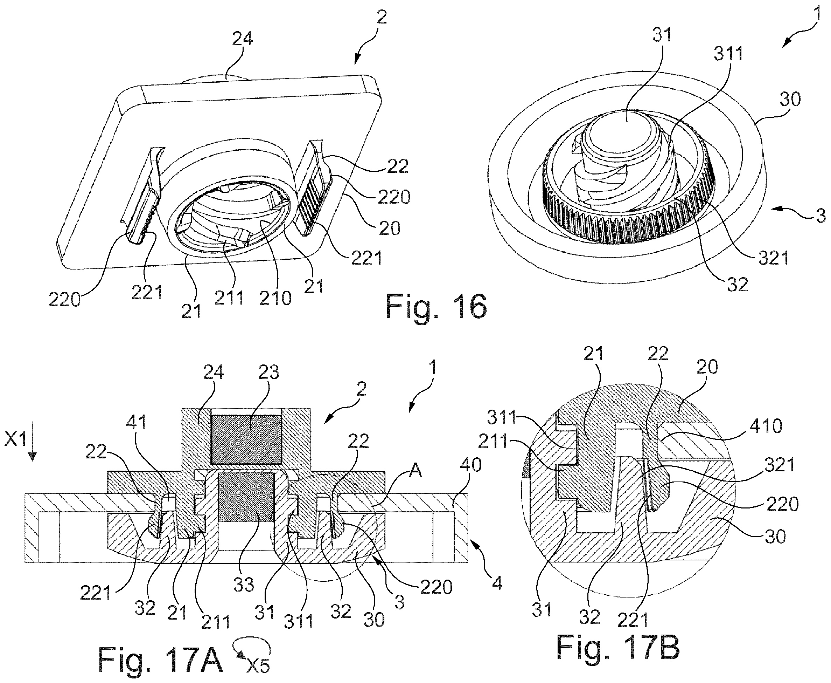

Fig. 16, 17A, 17B zeigen ein weiteres Ausführungsbeispiel, bei dem in Modifizierung des Ausführungsbeispiels gemäß Fig. 8A, 8B bis 15A, 15B innenseitig der Rastelemente 22, also an einer dem Eingriffsabschnitt 21 zugewandten Seite, eine Formschlusseinrichtung 221 in Form einer Verzahnung geformt ist, die zum Zusammenwirken mit einer Formschlusseinrichtung 321 an einer umfänglichen Außenseite des Fixierelements 32 des Sperrteils 3 ausgebildet ist.

Die Formschlusseinrichtungen 221, 321 beim Ausführungsbeispiel gemäß Fig. 16, 17A, 17B dienen dazu, ein (ungewolltes) Verdrehen des Sperrteils 3 gegenüber dem Basisteil 2 zu verhindern. Wenn das Sperrteil 3 an das Basisteil 2 angesetzt, die Befestigungsbaugruppe 4 dabei aber nicht gegenüber dem Basisteil 2 belastet ist, so können die Formschlusseinrichtungen 221, 321 übereinander ratschen und das Sperrteil 3 somit entlang der Schraubrichtung X5 zu dem Basisteil 2 verdreht werden. Ist die Verbindung zwischen dem Basisteil 2 und der Befestigungsbaugruppe 4 hingegen belastet dadurch, dass eine Kraft entlang der Ansetzrichtung X1 zwischen dem Basisteil 2 und der Befestigungsbaugruppe 4 anliegt, so werden die Formschlusseinrichtungen 221, 321 durch Belastung der Rastelemente 22 radial nach innen formschlüssig miteinander in Eingriff gepresst, sodass die Drehstellung des Sperrteils 3 gegenüber dem Basisteil 2 gesichert ist und das Sperrteil 3 somit entlang der Schraubrichtung X5 nicht ohne weiteres zu dem Basisteil 2 verdreht werden kann. Die Befestigung der Befestigungsbaugruppe 4 an dem Basisteil 2 ist damit zusätzlich gesichert und gesperrt.

Ansonsten ist das Ausführungsbeispiel gemäß Fig. 16, 17A, 17B funktional identisch dem Ausführungsbeispiel gemäß Fig. 8A, 8B bis 15A, 15B.

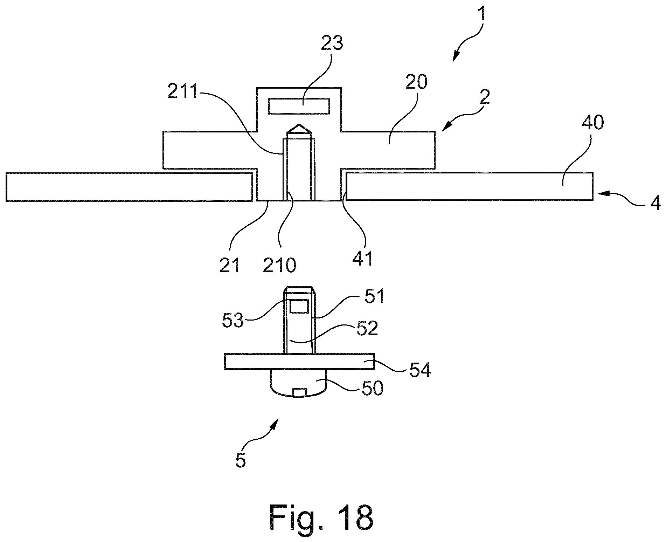

Fig. 18 zeigt ein nicht erfindungsgemäßes Ausführungsbeispiel, bei dem eine Befestigungsbaugruppe 4 über ein Schraubelement 5 mit einem Basisteil 2 verbunden werden kann. Das Basisteil 2 kann wiederum an einer übergeordneten Baugruppe, zum Beispiel einem Fahrzeug, festgelegt oder Bestandteil einer solchen übergeordneten Baugruppe sein, sodass über das Basisteil 2 die Befestigungsbaugruppe 4, zum Beispiel in Form eines Schutzblechs eines Fahrrads, festgelegt werden kann.

Das Basisteil 2 weist ein erstes Magnetelement 23 und das Schraubelement 5 ein zweites Magnetelement 53 an einem von einem Kopf 50 vorstehenden Schaft 51 auf. An dem Schaft 51 des Schraubelements 5 ist zudem in üblicher Weise ein Gewinde 52 geformt derart, dass das Schraubelement 5 in eine Eingriffsöffnung 210 mit einem darin geformten Gewinde 211 eingeschraubt werden kann, um die Befestigungsbaugruppe 4 an dem Basisteil 2 festzulegen. In eingeschraubter Stellung wird die Befestigungsbaugruppe 4 beispielsweise zwischen einem Körper 20 des Basisteils 2 und einer Scheibe 54, durch die der Schaft 51 des Schraubelements 5 hindurchgreift, gehalten und darüber an dem Basisteil 2 festgelegt.

Dadurch, dass an dem Basisteil 2 einerseits und an dem Schraubelement 5 andererseits jeweils ein Magnetelement 23, 53 angeordnet ist, wird die Verbindung des Schraubelements 5 mit dem Basisteils 2 in eingeschraubter Stellung magnetisch gesichert. Insbesondere bei einer Vibrationsbelastung kann sich das Schraubelement 5 somit nicht ungewollt von dem Basisteil 2 lösen.

Der der Erfindung zugrunde liegende Gedanke ist nicht beschränkt auf die dargestellten Ausführungsbeispiele, sondern lässt sich auch in anderer Weise verwirklichen.

Die Magnetelemente bei den vorangehend beschriebenen Ausführungsbeispielen können zum Beispiel jeweils als Permanentmagnet ausgebildet sein. Denkbar ist aber auch, dass die Magnetelemente einerseits als Permanentmagnet und andererseits als ferromagnetischer Anker ausgebildet sind. Entscheidend ist in diesem Zusammenhang nur, dass über die Magnetelemente eine magnetische Anziehungskraft zum Unterstützen des Ansetzens der Teile aneinander und/oder zum Halten der Teile aneinander in einer verbundenen Stellung bereitgestellt wird.

Eine Befestigungsvorrichtung der beschriebenen Art kann zum Befestigen ganz unterschiedlicher Befestigungsbaugruppen an ganz unterschiedlichen übergeordneten Baugruppen dienen. Vorteilhaft kann sein, eine solche Befestigungsvorrichtung an einem Fahrzeug, zum Beispiel einem Fahrrad zum Befestigen eines Schutzblechs, einzusetzen. Dies ist jedoch nicht beschränkend.

### Bezugszeichenliste

- 1: Befestigungsvorrichtung
- 2: Basisteil
- 20: Körper
- 21: Eingriffsabschnitt (Zapfen)
- 210: Eingriffsöffnung
- 211: Gewinde
- 22: Rastelement
- 220: Formschlusselement
- 221: Formschlusseinrichtung
- 23: Magnetelement
- 24: Abschnitt
- 3: Sperrteil
- 30: Körper
- 31: Eingriffselement (Zapfen)
- 311: Gewinde
- 32: Fixierelement
- 321: Formschlusseinrichtung
- 33: Magnetelement
- 4: Befestigungsbaugruppe
- 40: Flächenabschnitt
- 41: Befestigungsöffnung
- 410: Randabschnitt
- 5: Schraubelement
- 50: Kopf
- 51: Schaft
- 52: Gewinde
- 53: Magnetelement
- 54: Scheibenelement
- X1, X2: Ansetzrichtung
- X3: Schraubrichtung
- X4: Löserichtung
- X5: Schraubrichtung

## Patentansprüche

1. Befestigungsvorrichtung (1), mit
- einem Basisteil (2) und einer Befestigungsbaugruppe (4), die entlang einer Ansetzrichtung (X1) aneinander ansetzbar sind, und
- zumindest einem Rastelement (22), das an dem Basisteil (2) oder der Befestigungsbaugruppe (4) angeordnet ist, wobei das Basisteil (2) und die Befestigungsbaugruppe (4) in einer angesetzten Stellung über das zumindest eine Rastelement (22) formschlüssig miteinander verbunden sind,
und mit einem Sperrteil (3), das in der angesetzten Stellung des Basisteils (2) und der Befestigungsbaugruppe (4) mit dem Basisteil (2) verbindbar ist, wobei das Sperrteil (3) ein Fixierelement (32) aufweist, das ausgebildet ist, zum Sperren der formschlüssigen Verbindung zwischen dem Basisteil (2) und der Befestigungsbaugruppe (4) mit dem zumindest einen Rastelement (22) zusammenzuwirken,
**dadurch gekennzeichnet, dass** das Basisteil (2) und/oder die Befestigungsbaugruppe (4) ein erstes Magnetelement (23) und das Sperrteil (3) ein zweites Magnetelement (33) aufweisen, die beim Verbinden des Basisteils (2) und des Sperrteils (3) miteinander magnetisch anziehend zusammenwirken. .

2. Befestigungsvorrichtung (1) nach Anspruch 1, **dadurch gekennzeichnet, dass** das Basisteil (2) einen Körper (20) und einen von dem Körper (20) vorstehenden Eingriffsabschnitt (21) mit einer Eingriffsöffnung (210) und das Sperrteil (3) ein Eingriffselement (31) zum Eingreifen in die Eingriffsöffnung (210) des Basisteils (2) aufweisen.

3. Befestigungsvorrichtung (1) nach Anspruch 1 oder 2, **dadurch gekennzeichnet, dass** das Basisteil (2) eine erste Gewindeeinrichtung (211) und/oder das Sperrteil (3) eine zweite Gewindeeinrichtung (311) aufweisen, wobei das Sperrteil (3) schraubend mit dem Basisteil (2) verbindbar ist.

4. Befestigungsvorrichtung (1) nach einem der Ansprüche 1 bis 3, **dadurch gekennzeichnet, dass** die Befestigungsbaugruppe (4) eine Befestigungsöffnung (41) aufweist, in die das zumindest eine Rastelement (22) in der angesetzten Stellung eingreift.

5. Befestigungsvorrichtung (1) nach Anspruch 4, **dadurch gekennzeichnet, dass** das zumindest eine Rastelement (22) in der angesetzten Stellung mit einem die Befestigungsöffnung (41) zumindest abschnittsweise begrenzenden Randabschnitt (410) der Befestigungsbaugruppe (4) formschlüssig verbunden ist.

6. Befestigungsvorrichtung (1) nach Anspruch 5, **dadurch gekennzeichnet, dass** das Fixierelement (32) ausgebildet ist, das zumindest eine Rastelement (22) in Eingriff mit dem Randabschnitt (410) zu halten.

7. Befestigungsvorrichtung (1) nach Anspruch 5 oder 6, **dadurch gekennzeichnet, dass** das Basisteil (2) zwei Rastelemente (22) zum Zusammenwirken mit gegenüberliegenden Randabschnitten (410) der Befestigungsbaugruppe (4) aufweist.

8. Befestigungsvorrichtung (1) nach Anspruch 7, **dadurch gekennzeichnet, dass** das Fixierelement (32), wenn das Sperrteil (3) mit dem Basisteil (2) verbunden ist, zwischen den Rastelementen (22) angeordnet ist.

9. Befestigungsvorrichtung (1) nach einem der vorangehenden Ansprüche, **dadurch gekennzeichnet, dass** das zumindest eine Rastelement (22) beim Ansetzen des Basisteils (2) und der Befestigungsbaugruppe (4) aneinander elastisch auslenkbar ist und ein Formschlusselement (220) zum Herstellen der formschlüssigen Verbindung in der angesetzten Stellung aufweist.

10. Befestigungsvorrichtung (1) nach Anspruch 9, **dadurch gekennzeichnet, dass** das Fixierelement (321) ausgebildet ist, auf eine dem Formschlusselement (220) abgewandte Seite des zumindest einen Rastelements (22) einzuwirken.

11. Befestigungsvorrichtung (1) nach einem der vorangehenden Ansprüche, **dadurch gekennzeichnet, dass** das Basisteil (2) oder die Befestigungsbaugruppe (4) eine erste Formschlusseinrichtung (221) und das Sperrteil (3) eine zweite Formschlusseinrichtung (321) zum Hindern eines Verdrehens des Sperrteils (3) gegenüber dem Basisteil (2) um die Ansetzrichtung (X1) aufweisen.

12. Befestigungsvorrichtung (1) nach einem der vorangehenden Ansprüche, **dadurch gekennzeichnet, dass** das Sperrteil (3) einen Körper (30) aufweist, von dem das Fixierelement (32) vorsteht.

13. Befestigungsvorrichtung (1) nach Anspruch 12, **dadurch gekennzeichnet, dass** das Fixierelement (32) sich umfänglich um die Ansetzrichtung (X1), insbesondere ringförmig, an dem Körper (30) erstreckt.

14. Zweirad mit einer Befestigungsvorrichtung (1) nach einem der vorangehenden Ansprüche.

## Claims

1. A fastening device (1), comprising
- a base part (2) and a fastening assembly (4), which can be fitted to each other along a fitting direction (X1), and
- at least one latching element (22) which is arranged on the base part (2) or the fastening assembly (4), wherein the base part (2) and the fastening assembly (4) in a fitted position are positively connected to each other via the at least one latching element (22),
and with a blocking part (3) which in the fitted position of the base part (2) and the fastening assembly (4) can be connected to the base part (2), wherein the blocking part (3) includes a fixing element (32) which is configured to cooperate with the at least one latching element (22) in order to block the positive connection between the base part (2) and the fastening assembly (4),
**characterized in that**
the base part (2) and/or the fastening assembly (4) includes a first magnetic element (23) and the blocking part (3) includes a second magnetic element (33), which cooperate with each other in a magnetically attracting manner when the base part (2) and the blocking part (3) are connected to each other.

2. The fastening device (1) according to claim 1, **characterized in that** the base part (2) includes a body (20) and an engaging portion (21) with an engagement opening (210), which protrudes from the body (20), and the blocking part (3) includes an engaging element (31) for engaging into the engagement opening (210) of the base part (2).

3. The fastening device (1) according to claim 1 or 2, **characterized in that** the base part (2) includes a first thread means (211) and/or the blocking part (3) includes a second thread means (311), wherein the blocking part (3) is screwingly connectable to the base part (2).

4. The fastening device (1) according to any of claims 1 to 3, **characterized in that** the fastening assembly (4) includes a fastening opening (41) into which the at least one latching element (22) engages in the fitted position.

5. The fastening device (1) according to claim 4, **characterized in that** in the fitted position the at least one latching element (22) is positively connected to an edge portion (410) of the fastening assembly (4), which at least sectionally delimits the fastening opening (41).

6. The fastening device (1) according to claim 5, **characterized in that** the fixing element (32) is configured to hold the at least one latching element (22) in engagement with the edge portion (410).

7. The fastening device (1) according to claim 5 or 6, **characterized in that** the base part (2) includes two latching elements (22) for cooperating with opposed edge portions (410) of the fastening assembly (4).

8. The fastening device (1) according to claim 7, **characterized in that** the fixing element (32) is arranged between the latching elements (22) when the blocking part (3) is connected to the base part (2).

9. The fastening device (1) according to any of the preceding claims, **characterized in that** when the base part (2) and the fastening assembly (4) are fitted to each other, the at least one latching element (22) is elastically deflectable and in the fitted position includes a form-fit element (220) for producing the positive connection.

10. The fastening device (1) according to claim 9, **characterized in that** the fixing element (321) is configured to act on a side of the at least one latching element (22) that faces away from the form-fit element (220).

11. The fastening device (1) according to any of the preceding claims, **characterized in that** the base part (2) or the fastening assembly (4) includes a first form-fit device (221) and the blocking part (3) includes a second form-fit device (321) to inhibit a rotation of the blocking part (3) with respect to the base part (2) around the fitting direction (X1).

12. The fastening device (1) according to any of the preceding claims, **characterized in that** the blocking part (3) has a body (30) from which the fixing element (32) protrudes.

13. The fastening device (1) according to claim 12, **characterized in that** the fixing element (32) circumferentially extends around the fitting direction (X1), in particularly annularly, at the body (30).

14. A two-wheeler comprising a fastening device (1) according to any of the preceding claims.

## Revendications

1. Dispositif de fixation (1) avec
- une partie de base (2) et un module de fixation (4), qui peuvent être placés l'un sur l'autre le long d'une direction de placement (X1), et
- au moins un élément d'enclenchement (22), qui est disposé sur la partie de base (2) ou sur le module de fixation (4), dans lequel la partie de base (2) et le module de fixation (4) sont reliés l'un à l'autre par complémentarité de forme par l'intermédiaire de l'au moins un élément d'enclenchement (22) dans une position placée,
et avec une partie de verrouillage (3), qui peut être reliée à la partie de base (2) dans la position placée de la partie de base (2) et du module de fixation (4), dans lequel la partie de verrouillage (3) présente un élément de blocage (32), qui est réalisé pour coopérer avec l'au moins un élément d'enclenchement (22) pour verrouiller la liaison à complémentarité de forme entre la partie de base (2) et le module de fixation (4),
**caractérisé en ce que** la partie de base (2) et/ou le module de fixation (4) présentent un premier élément magnétique (23) et la partie de verrouillage (3) présente un deuxième élément magnétique (33), qui coopèrent avec une attraction magnétique lors de la liaison de la partie de base (2) et de la partie de verrouillage (3) l'une à l'autre.

2. Dispositif de fixation (1) selon la revendication 1, **caractérisé en ce que** la partie de base (2) présente un corps (20) et une section de prise (21) faisant saillie du corps (20), avec une ouverture de saillie (210) et la partie de verrouillage (3) présente un élément de prise (31) destiné à venir en prise avec l'ouverture de prise (210) de la partie de base (2).

3. Dispositif de fixation (1) selon la revendication 1 ou 2, **caractérisé en ce que** la partie de base (2) présente un premier système de filetage (211) et/ou la partie de verrouillage (3) présente un deuxième système de filetage (311), dans lequel la partie de verrouillage (3) peut être reliée par vissage à la partie de base (2).

4. Dispositif de fixation (1) selon l'une quelconque des revendications 1 à 3, **caractérisé en ce que** le module de fixation (4) présente une ouverture de fixation (41), avec laquelle l'au moins un élément d'enclenchement (22) vient en prise dans la position placée.

5. Dispositif de fixation (1) selon la revendication 4, **caractérisé en ce que** l'au moins un élément d'enclenchement (22) est relié par complémentarité de forme à une section de bord (410), délimitant au moins par endroits l'ouverture de fixation (41), du module de fixation (4) dans la position placée.

6. Dispositif de fixation (1) selon la revendication 5, **caractérisé en ce que** l'élément de blocage (32) est réalisé pour maintenir l'au moins un élément d'enclenchement (22) en prise avec la section de bord (410).

7. Dispositif de fixation (1) selon la revendication 5 ou 6, **caractérisé en ce que** la partie de base (2) présente deux éléments d'enclenchement (22) destinés à coopérer avec des sections de bord (410) en vis-à-vis du module de fixation (4).

8. Dispositif de fixation (1) selon la revendication 7, **caractérisé en ce que** l'élément de blocage (32) est disposé entre les éléments d'enclenchement (22) lorsque la partie de verrouillage (3) est reliée à la partie de base (2).

9. Dispositif de fixation (1) selon l'une quelconque des revendications précédentes, **caractérisé en ce que** l'au moins un élément d'enclenchement (22) peut être dévié élastiquement lors du placement de la partie de base (2) et du module de fixation (4) l'un sur l'autre et présente un élément à complémentarité de forme (220) pour établir la liaison à complémentarité de forme dans la position placée.

10. Dispositif de fixation (1) selon la revendication 9, **caractérisé en ce que** l'élément de blocage (321) est réalisé pour agir sur un côté, opposé à l'élément à complémentarité de forme (220), de l'au moins un élément d'enclenchement (22).

11. Dispositif de fixation (1) selon l'une quelconque des revendications précédentes, **caractérisé en ce que** la partie de base (2) ou le module de fixation (4) présente un premier système à complémentarité de forme (221) et la partie de verrouillage (3) présente un deuxième système à complémentarité de forme (321) pour empêcher toute rotation de la partie de verrouillage (3) par rapport à la partie de base (2) autour de la direction de placement (X1).

12. Dispositif de fixation (1) selon l'une quelconque des revendications précédentes, **caractérisé en ce que** la partie de verrouillage (3) présente un corps (30), duquel l'élément de blocage (32) fait saillie.

13. Dispositif de fixation (1) selon la revendication 12, **caractérisé en ce que** l'élément de blocage (32) s'étend en périphérie autour de la direction de placement (X1), en particulier de manière annulaire, sur le corps (30).

14. Deux-roues avec un dispositif de fixation (1) selon l'une quelconque des revendications précédentes.
